Europäisches Patentamt

European Patent Office

Office européen des brevets

(19)

(11) Veröffentlichungsnummer: **0 519 186 B1**

## (12) EUROPÄISCHE PATENTSCHRIFT

(45) Veröffentlichungstag der Patentschrift: **28.09.94**

(21) Anmeldenummer: **92107175.9**

(22) Anmeldetag: **28.04.92**

(51) Int. Cl.5: **C09D 5/03**, C09D 157/10, C08G 59/62, //(C09D157/10, 201:06)

(54) **Pulverlacke.**

(30) Priorität: **11.05.91 DE 4115495**

(43) Veröffentlichungstag der Anmeldung:
**23.12.92 Patentblatt 92/52**

(45) Bekanntmachung des Hinweises auf die
Patenterteilung:
**28.09.94 Patentblatt 94/39**

(84) Benannte Vertragsstaaten:
**BE DE ES FR GB IT NL**

(56) Entgegenhaltungen:
**EP-A- 0 473 999**

(73) Patentinhaber: **BAYER AG**

**D-51368 Leverkusen (DE)**

(72) Erfinder: **Wamprecht, Christian, Dr.**
**Regattastrasse 20**
**W-4040 Neuss 22 (DE)**
Erfinder: **Kreuder, Hans-Joachim, Dr.**
**Auf Rothenfeld 23a**
**W-4154 Tönisvorst (DE)**
Erfinder: **Pedain, Josef, Dr.**
**Haferkamp 6**
**W-5000 Köln 80 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von unterhalb 30°C festen und oberhalb 150°C flüssigen, pulverförmigen, gegebenenfalls Hilfs- und Zusatzmittel der Pulverlacktechnologie enthaltenden Kombinationen von A) Carbonsäureanhydrid- und Epoxidgruppen aufweisenden Copolymerisaten und B) Polyhydroxylverbindungen als Pulverlack.

Die Verwendung von Kombinationen aus Polyacrylaten mit mindestens zwei Carboxylgruppen pro Molekül und Polyepoxidverbindungen, gegebenenfalls auch auf Acrylatbasis, für Pulverlacke ist bereits bekannt.

Die japanische Patentanmeldung 73-29 319 (Veröffentlichungsnummer: 49 116 134; C. A. 82(24): 157 882 e) beschreibt wärmehärtbare Pulverbeschichtungsmittel, bestehend aus A) einem festen Acrylatharz, das hergestellt wird durch Umsetzung eines Hydroxylgruppen aufweisenden Copolymerisats mit einer Polycarbonsäure oder deren Anhydrid, und B) einem Epoxidgruppen aufweisenden Copolymerisat. Die beiden Polymerisate werden als etwa 100°C heiße Schmelzen gemischt und nach Abkühlen gemahlen. Die Aushärtung der auf Metalloberflächen aufgebrachten Beschichtungen erfolgt bei Temperaturen von etwa 200°C.

Die DE-OS 23 47 680 beschreibt wärmehärtbare Pulverlacke, bestehend aus A) zu 50 bis 97 % aus einem, ein Molekulargewicht zwischen 3 000 und 15 000 und einen Erweichungspunkt zwischen 80 und 150°C aufweisenden, Epoxidgruppen enthaltenden Copolymerisat, und B) zu 50 bis 3 % aus einem carboxylgruppenhaltigen Härter mit einem Erweichungspunkt von mindestens 50°C, wobei der Härter auch ein Carboxylgruppen aufweisendes Copolymerisat sein kann.

Die japanische Patentanmeldung 75-146 705 (Veröffentlichungsnummer: 52 069 936; C. A. 88(12): 73 374 a) beschreibt wärmehärtbare Pulverlacke auf Basis von Glycidyl(meth)acrylat-Copolymeren, bestehend aus A) 100 Teilen eines Copolymerisats (Tg 30 bis 100°C, Molekulargewicht 3 000 bis 70 000), enthaltend 10 bis 50 Gew.-% Glycidyl(meth)acrylat, 30 bis 85 Gew.-% Acrylsäure-$C_1$-$C_{12}$-alkylester und 0 bis 60 Gew.-% eines weiteren Comonomeren, B) 0,1 bis 30 Teilen eines die Fließeigenschaften regelnden Copolymeren (Tg > 50°C, Molekulargewicht > 1 000), enthaltend 30 bis 85 Gew.-% (Meth)-Acrylsäurealkylester, 1 bis 50 Gew.-% eines Monomeren mit einer Glycidyl-, Carboxyl-, Hydroxyl- oder Amidgruppe und 0 bis 69 Gew.-% eines weiteren Monomeren sowie C) 3 bis 55 Teilen einer aliphatischen Dicarbonsäure mit 4 bis 20 Kohlenstoffatomen. Die Lacke zeigen eine gute Haftung an Metallen ohne vorhergehende Oberflächenbehandlung.

Die US-PS 3 991 132 und US-PS 3 991 133 beschreiben hitzehärtbare Pulverlacke aus A) einem epoxidhaltigen Copolymeren, bestehend aus 5 bis 20 % Glycidylmethacrylat und 80 bis 95 % anderen Comonomeren (Tg 40 bis 90°C, Molekulargewicht 1 500 bis 15 000), und B) einem Anhydridvernetzer, entweder aus einem Dicarbonsäureanhydrid oder aus einem Dicarbonsäureanhydrid-Homopolymer, mit der Maßgabe, daß das Copolymere difunktionell ist, und aus im Falle von US-PS 3 991 132 mindestens 2 bis 10 % eines ungesättigten Säureamids und im Falle von US-PS 3 991 133 mindestens 2 bis 10 % eines $C_5$-$G_7$-Hydroxyalkyl(meth)acrylats neben 70 bis 93 % anderen Comonomeren, wie z.B. Methyl-, Butylmethacrylat, Styrol, Vinyltoluol, aufgebaut ist. Darüber hinaus ist soviel Anhydridhärter durch eine Hydroxycarbonsäure ersetzt, daß auf jede funktionelle Gruppe des Copolymeren 0,1 bis 0,4 Carboxylgruppen der Hydroxycarbonsäure entfallen.

Ebenfalls bekannt ist die Verwendung von Kombinationen aus Komponenten mit Anhydridgruppen und Komponenten mit Hydroxylgruppen für Pulverlacke.

Entsprechende Lacksysteme sind beschrieben in den US-Patenten 4 069 275 und 4 101 606, in den Britischen Patenten 1 366 081 und 1 561 828 sowie in den Europäischen Patentanmeldungen 73 022 und 209 377. Solche Pulverlacke werden normalerweise bei Temperaturen im Bereich von 130 bis 200°C ausgehärtet. Es hat sich jedoch gezeigt, daß in relativ tiefen Temperaturbereichen, wie z.B. 130 bis 160°C, die Vernetzungsreaktionen nicht vollständig abgelaufen sind und infolgedessen die Lösungsmittelbeständigkeit entsprechender Lackfilme nicht ausreichend ist. Erst bei Härtungstemperaturen zwischen 170 und 200°C werden Lackfilme mit akzeptabler Lösungsmittelbeständigkeit erhalten. In keiner der genannten Patentschriften werden Copolymerisate als Bindemittel für Pulverlacke beschrieben, die gleichzeitig cyclische Carbonsäureanhydrid- und Epoxidgruppen aufweisen.

Jetzt wurde überraschend gefunden, daß Copolymerisate olefinisch ungesättigter Verbindungen, die sowohl cyclische Carbonsäureanhydrid- als auch Epoxidgruppen im gleichen Makromolekül enthalten, in Kombination mit Polyolen ausgezeichnete Bindemittel für Pulverlacke darstellen, sofern sie den diesbezüglichen Anforderungen bezüglich des Erweichungspunktes bzw. -bereiches genügen. Der besondere Vorteil solcher Bindemittelkombinationen liegt in der Tatsache, daß schon bei niedrigen Einbrenntemperaturen, wie z.B. 130 bis 150°C, lösungsmittelbeständige Lackfilme erhalten werden.

2

Ein weiterer Vorteil liegt in der Tatsache, daß in der Komponente A) zunächst noch keine freien Carboxylgruppen, welche zur Vernetzung mit den Epoxidgruppen der Komponente A) erforderlich sind, vorliegen, sondern daß diese Carboxylgruppen erst durch die Reaktion der Carbonsäureanhydridgruppen der Komponente A) mit den Hydroxylgruppen der Komponente B) gebildet werden. Somit weisen die neuen Bindemittelkombinationen eine erheblich bessere Lagerstabilität bei Raumtemperatur auf, als vergleichbare, Carboxylgruppen aufweisende, Systeme des Standes der Technik.

Aufgrund der erzielbaren hohen Vernetzungsdichten können aus den erfindungsgemäß zu verwendenden Bindemittelkombinationen Pulverbeschichtungen hergestellt werden, die bezüglich Chemikalien- und Lösungsmittelbeständigkeit ein sehr hohes Niveau besitzen.

Die erfindungsgemäß zu verwendenden Bindemittelkombinationen weisen daher einerseits bei Raumtemperatur oder mäßig erhöhter Temperatur unterhalb ihres Erweichungsbereichs eine ausgezeichnete Lagerstabilität auf und gestatten andererseits die Herstellung von Beschichtungen mit hervorragenden anwendungstechnischen Eigenschaften.

Gegenstand der Erfindung ist die Verwendung von unterhalb 30°C festen, oberhalb 150°C flüssigen, gegebenenfalls Hilfs- und Zusatzmitteln der Pulverlack-Technologie enthaltenden, pulverförmigen Kombinationen aus

A) 10 bis 99 Gew.-Teilen einer Copolymerisatkomponente, bestehend aus mindestens einem Copolymerisat von olefinisch ungesättigten Verbindungen mit einem als Gewichtsmittel bestimmten Molekulargewicht von 1 500 bis 75 000, welches sowohl

(i) 1 bis 30 Gew.-% an cyclischen Carbonsäureanhydridgruppen (berechnet als $C_4H_2O_3$) als auch
(ii) 0,3 bis 10 Gew.-% an Epoxidgruppen (berechnet als $C_2H_3O$) chemisch gebunden enthält, und
B) 1 bis 90 Gew.-Teilen einer Polyolkomponente, bestehend aus mindestens einem organischen Polyol mit mindestens zwei Hydroxylgruppen pro Molekül

als Pulverlack, mit der Maßgabe, daß auf jede Anhydridgruppe der Komponente A) 0,1 bis 10 Hydroxylgruppen der Komponente B) entfallen.

Die eigene ältere deutsche Patentanmeldung P 4 027 609.0 befaßt sich zwar bereits mit Kombinationen aus A) Copolymerisaten, die sowohl cyclische Carbonsäureanhydrid-als auch Epoxidgruppen aufweisen, und B) Polyolen, jedoch werden diese Bindemittelkombinationen gemäß dieser älteren Anmeldung ausschließlich als Bindemittel für flüssige, insbesondere lösungsmittelhaltige Lacke eingesetzt. Irgendwelche Hinweise auf die Verwendbarkeit derartiger oder ähnlicher Kombinationen als Bindemittel für Pulverlacke werden in der älteren Anmeldung nicht gegeben.

Unter "pulverförmigen Kombinationen" sollen im Rahmen der Erfindung sowohl Gemische aus pulverförmigen Copolymerisaten A) mit pulverförmigen Polyhydroxylverbindungen B) als auch "gemischte Pulver" verstanden werden, deren einzelne Pulverpartikel jeweils bereits die Einzelkomponenten A) und B) enthalten, wobei die gegebenenfalls mitverwendeten Hilfs- und Zusatzmittel C) als separate Komponente in dem Gemisch vorliegen können oder auch bei der Herstellung der pulverförmigen Bindemittelkomponenten A) und/oder B) bzw. bei der Herstellung der pulverförmigen Bindemittelkombinationen AB in diese eingearbeitet worden sein können.

Die erfindungsgemäß zu verwendenden Kombinationen sind unterhalb 30°C, vorzugsweise unterhalb 35°C, fest und oberhalb 150°C, vorzugsweise oberhalb 120°C, flüssig.

Die Copolymerisatkomponente A) besteht aus mindestens einem Copolymerisat, welches sowohl cyclische Carbonsäureanhydridgruppen (berechnet als $C_4H_2O_3$) in einer Menge von 1 bis 30 Gew.-%, vorzugsweise 5 bis 25 Gew.-%, als auch chemisch eingebaute Epoxidgruppen (berechnet als $C_2H_3O$) in einer Menge von 0,3 bis 20 Gew.-%, vorzugsweise 1 bis 15 Gew.-%, enthält. Die Copolymerisate weisen ein, nach der Methode der Gelpermeationschromatographie unter Verwendung von Polystyrol als Standard bestimmbares, Molekulargewicht (Gewichtsmittel) von 1 500 bis 75 000, vorzugsweise 2 000 bis 60 000 und besonders bevorzugt 3 000 bis 40 000, auf.

Es handelt sich bei den Copolymerisaten um solche auf Basis von vorzugsweise einfach olefinisch ungesättigten Monomeren.

Zur Herstellung der Copolymerisate kommen drei Gruppen von olefinisch ungesättigten Monomeren zum Einsatz, und zwar

a) Anhydridgruppen enthaltende, olefinisch ungesättigte Monomere,
b) Epoxidgruppen enthaltende, olefinisch ungesättigte Monomere und
c) anhydridgruppen- und epoxidgruppenfreie, nichtfunktionelle, olefinisch ungesättigte Monomere.

Die Monomeren a) werden im allgemeinen in einer Menge von 1 bis 30, vorzugsweise 5 bis 25 Gew.-Teilen, die Monomeren b) in einer Menge von 1 bis 66 Gew.-Teilen, vorzugsweise 3 bis 50 Gew.-Teilen, und die Monomeren c) in einer Menge von 4 bis 98 Gew.-Teilen, vorzugsweise 25 bis 92 Gew.-Teilen, eingesetzt, mit der Maßgabe, daß die Summe der Gewichtsteile a) bis c) 100 ergibt. Im übrigen werden die Anteile der einzelnen Monomeren in dem der Copolymerisation zuzuführenden Gemisch im Rahmen dieser Offenbarung so bemessen, daß in den Copolymerisaten die obengenannten Mengen an chemisch eingebauten Anhydrid- und Epoxidgruppen vorliegen. Der Gehalt der Copolymerisate an diesen Gruppierungen entspricht dem Gehalt des Monomergemischs an den gleichen Gruppen, da davon ausgegangen werden kann, daß die Copolymerisate bezüglich ihrer chemischen Zusammensetzung der chemischen Zusammensetzung des Monomerengemischs entsprechen.

Bei den Monomeren a) handelt es sich um einfach olefinisch ungesättigte Carbonsäureanhydride, wie z.B. Maleinsäureanhydrid oder Itaconsäureanhydrid. Maleinsäureanhydrid ist bevorzugt.

Typische Beispiele für Monomere b) sind z.B. Glycidylacrylat, Glycidylmethacrylat oder Allylglycidylether, wobei die beiden erstgenannten bevorzugt sind.

Die Monomeren c) weisen im allgemeinen ein Molekulargewicht von 86 bis 400 auf. Es handelt sich um die üblichen anhydridgruppen- und epoxidgruppenfreien, nichtfunktionellen, vorzugsweise einfach olefinisch ungesättigten Monomeren, wie sie auch bereits bei den Verfahren des obengenannten Standes der Technik als Monomere eingesetzt worden sind.

Typische Beispiele sind Ester der Acryl- und Methacrylsäure, wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat; Vinylaromaten, wie beispielsweise Styrol, Vinyltoluol, α-Methylstyrol, α-Ethylstyrol, kernsubstituierte, gegebenenfalls Isomerengemische darstellende Diethylstyrole, Isopropylstyrole, Butylstyrole und Methoxystyrole; Vinylether, wie beispielsweise Ethylvinylether, n-Propylvinylether, Isopropylvinylether, n-Butylvinylether und Isobutylvinylether; Vinylester, wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden, mit der Maßgabe, daß diese Auswahl der bei der Herstellung der Copolymerisate eingesetzten Monomeren so erfolgt, daß die resultierenden Copolymerisate unterhalb 30°C fest sind und bei Temperaturen von oberhalb 150°C Polymerschmelzen darstellen. Diese Bedingungen besagen, daß die Copolymerisate eine mittels der Differentialthermoanalyse (DTA) bestimmte Glasübergangstemperatur Tg innerhalb des Bereichs von 30 bis 100°C, vorzugsweise 35°C bis 80°C, aufweisen. Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Glasübergangstemperatur der Copolymeren führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z.B. Methylacrylat, Ethylacrylat, n-Butylacrylat, Isobutylacrylat, 2-Ethylhexylacrylat, Laurylacrylat, Ethyldiglykolacrylat; Vinylester, wie z.B. Vinylpropionat; Vinylether, wie z.B. Vinylmethylether, Vinylethylether, Vinylpropylether, Vinylisobutylether, Vinyloctadecylether, Vinylcyclohexylether.

"Hartmachende" Monomere sind beispielsweise Alkylester der Methacrylsäure, wie z.B. Methylmethacrylat, Ethylmethacrylat, Isobutylmethacrylat, Cyclohexylmethacrylat, 2-Phenylethylmethacrylat, Tetrahydrofurfurylmethacrylat, Isopropylmethacrylat, tert.-Butylmethacrylat, Neopentylmethacrylat, Isobornylmethacrylat, Benzylmethacrylat; Vinylaromaten, wie z.B. Styrol, Vinyltoluol, α-Ethylstyrol; heterocyclische Vinylverbindungen, wie z.B. Vinylpyrrolidon, Vinylcaprolactam oder Vinylcarbazol.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren bei Temperaturen von 60 bis 160°C, vorzugsweise 80 bis 150°C, in Gegenwart von Radikalbildnern und gegebenenfalls Molekulargewichtsreglern copolymerisiert.

Die Herstellung der Copolymerisate erfolgt vorzugsweise in inerten Lösungsmitteln. Geeignete Lösungsmittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexylsowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozeß zugeführt werden, bei dem das Lösungsmittel beispielsweise in einem Ausdampfextruder bei ca. 120 bis 160°C und einem Vakuum von 100 bis 300 mbar oder in einem Sprühtrockner entfernt und die erfindungsgemäß zu verwendenden Copolymerisate gewonnen werden.

Die Komponente B) besteht aus mindestens einer organischen Verbindung, die mindestens zwei Hydroxylgruppen pro Molekül aufweist und eine Glasübergangstemperatur Tg bzw. einen Schmelzpunkt innehalb des Bereichs von 0 bis 150°C, vorzugsweise von 30 bis 150°C und insbesondere von 35 bis 120°C, besitzt. Die Verwendung von Komponenten B) mit einer unter 30°C liegenden Glasübergangstemperatur bzw. einem unter 30°C liegenden Schmelzpunkt, auch von bei Raumtemperatur flüssigen Verbindungen als Komponte B) ist insbesondere bei der bevorzugten Herstellung der erfindungsgemäß zu verwendenden Kombinationen in Extrudern oder Knetern unter Verwendung von entsprechend hochschmelzenden Komponenten A) möglich, da auf diese Weise selbst bei Verwendung von flüssigen Komponenten B) oberhalb 30°C feste, pulverisierbare Kombinationen AB erhalten werden können. Zu den bevorzugten Verbindungen, die als Komponente B) Verwendung finden können, gehören jene, die (im statistischen Mittel) 2 bis 50, vorzugsweise 2 bis 10, insbesondere 2 bis 6, Hydroxylgruppen pro Molekül aufweisen.

Als Komponente B) kommen beispielsweise den genannten Ausführungen bezüglich des Schmelzverhaltens und des Hydroxylgruppengehalts entsprechende Verbindungen eines über 261, vorzugsweise bei 262 bis 15 000, insbesondere bei 262 bis 1 000, liegenden Molekulargewichts (Zahlenmittel), ausgewählt aus der Gruppe bestehend aus hydroxyfunktionellen Copolymerisaten, hydroxyfunktionellen Polyethern, hydroxyfunktionellen Polyestern, gegebenenfalls Harnstoff-modifizierten, hydroxyfunktionellen Polyurethanen, hydroxyfunktionellen Polyharnstoffen, hydroxyfunktionellen Polycarbonaten und Gemischen derartiger hydroxyfunktioneller Verbindungen, in Betracht. Gut geeignet als Komponente B) sind beispielsweise den genannten Bedingungen bezüglich Schmelzverhalten und Hydroxylgruppengehalt entsprechende, Hydroxylgruppen aufweisende Polyharnstoffe, wie sie durch Umsetzung von Diisocyanaten wie beispielsweise 1-Isocyanato-3-isocyanotomethyl-3,5,5-trimethylcyclohexan (IPDI) mit Aminoalkoholen wie 2-Aminoethanol oder 1-Amino-2-propanol im Molverhältnis 1:2 zugänglich sind; Polyetherpolyole, wie beispielsweise das Umsetzungsprodukt von 1 Mol Bisphenol A mit 2 Mol Propylenoxid; Harnstoffgruppen aufweisende Polyurethane wie beispielsweise das Umsetzungsprodukt aus 2 Mol IPDI mit 1 Mol eines Diols wie beispielsweise Hexandiol-1,6 und 2 Mol eines Aminoalkohols wie beispielsweise 1-Amino-2-propanol; den gemachten Angaben bezüglich Schmelzverhalten und Hydroxylgruppengehalt entsprechende, Hydroxylgruppen aufweisende Polyurethane wie beispielsweise das Umsetzungsprodukt von 1 Mol 1-Amino-3-aminomethyl-3,5,5-trimethylcyclohexan (IPDA) mit 2 Mol Propylencarbonat oder 2 Mol Ethylencarbonat, den gemachten Angaben bezüglich Schmelzverhalten und Hydroxylgruppengehalt entsprechende, Copolymerisate olefinisch ungesättigter Verbindungen, bei deren Herstellung Hydroxylgruppen aufweisende Monomere wie beispielsweise 2-Hydroxyethyl-, 2-Hydroxypropyl- oder 2-Hydroxybutyl](meth)-acrylat mit Comonomeren, die keine funktionelle Gruppen aufweisen und die bereits oben beispielhaft genannt worden sind, in weitgehender Analogie zu der oben beschriebenen Arbeitsweise bezüglich der Herstellung der erfindungsgemäß zu verwendenden Komponente A) hergestellt worden sind.

Zu den bevorzugten Polyolkomponenten B) gehören jedoch auch niedermolekulare Polyhydroxylverbindungen des Molekulargewichtsbereichs 104 bis 261, die 2 bis 6 Hydroxylgruppen pro Molekül enthalten.

5

Beispielhaft genannt seien 1,6-Hexandiol, 1,7-Heptandiol, 1,2- und 1,8-Octandiol, 1,2- und 1,10-Decandiol, 2,2-Bis-(4-hydroxycyclohexyl)-propan, 1,1,1-Tris-(hydroxymethyl)-propan, N,N',N''-Tris-(2-hydroxyethyl)-isocyanurat (THEIC), 2,2-Bis-(hydroxymethyl)-1,3-propandiol, cis-1,2-Bis-(hydroxymethyl)-cyclohexan, 4,4-Bis-(hydroxymethyl)-cyclohexan, 2,5-Bis-(hydroxymethyl)-furan, 2,2'-Bis-(hydroxymethyl)-biphenyl, Bis-(hydroxymethyl)-malonsäurediethylester, 2,2-Bis-(hydroxymethyl)-5-norbornen, 2-Methyl-2-propyl- 1,3-propandiol, 1,4-Cyclohexandiol oder 2,2-Dimethyl-1,3-propandiol.

Bei der gegebenenfalls in den erfindungsgemäßen Pulverlacken vorliegenden Komponente C) handelt es sich um die in der Pulverlack-Technologie bekannten Hilfs- und Zusatzmittel. Zu nennen sind dabei Pigmente, wie z.B. Titandioxid, Verlaufsmittel, wie z.B. Siliconverbindungen, und Katalysatoren.

Obwohl die Pulverlacke an sich ohne Beschleunigungsmittel eingebrannt werden können, besteht die Möglichkeit der Zugabe von Katalysatoren, die die Reaktion zwischen Hydroxyl- und Carbonsäureanhydridgruppen einerseits und Epoxid- und Carbonsäuregruppen andererseits beschleunigen und dadurch die Einbrennzeit und/oder die Einbrenntemperatur reduzieren.

Solche Katalysatoren sind z.B. tert.- Aminogruppen aufweisende Verbindungen, wie z.B. 1,4-Diazabicyclo-(2,2,2)-octan, 1,8-Diazabicyclo-(5,4,0)-undec-7-en, 1,5-Diazabicyclo-(4,3,0)-non-5-en, 1,2-Dimorpholinoethan und 1,3,5-Tricyclohexylhexahydro-1,3,5-triazin; Salze, basierend auf tert.-Aminogruppen und quartären Ammoniumgruppen enthaltenden Verbindungen, wie z.B. (2-Hydroxyethyl)-trimethylammoniumchlorid, Triethylaminhydrochlorid, Tetrabutylammoniumchlorid, Tetraethylammoniumbromid, Tetrahexylammoniumchlorid und Tetramethylammoniumchlorid; organische Zinnverbindungen, wie z.B. Zinndioctoat, Dibutylzinndilaurat, Dibutylzinndiacetat und Dibutylzinndichlorid; Phosphorverbindungen, wie z.B. Triphenylphosphin.

Die Herstellung der gebrauchsfertigen pulverförmigen Überzugsmittel kann nach verschiedenen Varianten erfolgen. Beispielsweise ist es möglich, die Einzelkomponenten A), B) und C) als Pulver einfach miteinander zu vermischen. Vorzugsweise wird jedoch so vorgegangen, daß man die lösungsmittelfreien Copolymerisate A), die lösungsmittelfreien Polyhydroxylverbindungen B) und gegebenenfalls die Zusatzmittel C) in Extrudern oder Knetern bei Temperaturen von vorzugsweise 100 bis 120°C in der Schmelze homogenisiert. Der erstarrte Farbstoff wird gemahlen und durch Sieben von Kornanteilen oberhalb der gewünschten Korngrößen, beispielsweise oberhalb 0,1 mm befreit. Bei dieser Art der Herstellung der erfindungsgemäßen Pulverlacke tritt im allgemeinen noch keine nennenswerte Reaktion zwischen den Einzelkomponenten ein. Grundsätzlich möglich ist ebenfalls eine Herstellung von "gemischten Pulvern" AB (aus A) und B)) nach der genannten Methode und deren anschließende Durchmischung mit den gegebenenfalls mitzuverwendenden Hilfs- und Zusatzmitteln in einem weiteren Mischvorgang.

Die Art und die Mengenverhältnisse der Einzelkomponenten A) und B) werden im übrigen vorzugsweise so gewählt, daß auf jede Säureanhydridgruppe der Komponente A) 0,2 bis 4, vorzugsweise 0,5 bis 2, Hydroxylgruppen der Komponente B) und 0,1 bis 8, vorzugsweise 0,2 bis 4 und besonders bevorzugt 0,4 bis 1,5, Epoxidgruppen der Komponente A) entfallen.

Die so hergestellten pulverförmigen Überzugsmittel können nach üblichen Pulverauftragsverfahren, wie z.B. elektrostatischem Pulversprühen oder Wirbelsintern, auf die zu überziehenden hitzeresistenten Substrate aufgebracht werden. Die Härtung der Überzüge kann durch Erhitzen auf Temperaturen von 120 bis 220°C, vorzugsweise 130 bis 200°C, erfolgen. Man erhält dabei harte, glänzende, lösungsmittelfeste Überzüge mit hervorragenden Korrosionsschutzeigenschaften und einer guten Wärmefarbstabilität. Erfindungsgemäß können beliebige hitzeresistente Substrate, wie beispielsweise solche aus Glas, Kunststoffen oder Metallen, beschichtet werden.

Die in den nachfolgenden Beispielen genannten Teile und Prozente sind, sofern nicht anders angegeben, Gewichtsteile bzw. Gewichtsprozente.

I Allgemeine Herstellvorschrift für die Carbonsäureanhydrid- und Epoxidgruppen enthaltenden Copolymerisate $A_1$ bis $A_4$ und die Hydroxylgruppen enthaltenden Copolymerisate $B_1$ und $B_2$

In einem 25-l-Edelstahldruckreaktor mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 3 Stunden) und Teil III (Zugabe über einen Zeitraum von insgesamt 3,5 Stunden) zudosiert. Anschließend wird 1 Stunde bei der angegebenen Temperatur nachgerührt.

Die erhaltenen Polymerlösungen werden in einem handelsüblichen Ausdampfextruder bei einer Temperatur von ca. 150°C, einer Verweilzeit von ca. 2 Minuten und einem Vakuum von ca. 260 mbar vollständig vom Lösungsmittel befreit, anschließend abgekühlt und granuliert.

Die Reaktionstemperaturen und die Zusammensetzungen der Teile I bis III sind in Tabelle I zusammen mit den Kenndaten der erhaltenen Copolymerisate aufgeführt; die entsprechenden Daten für die Hydroxyl-gruppen enthaltenden Copolymerisate $B_1$ und $B_2$ sind in Tabelle II zu finden.

Tabelle I

| Anhydrid- und Epoxidgruppen enthaltende Copolymerisate (Mengenangaben in g) | | | | |
|---|---|---|---|---|
| Copolymerisate | $A_1$ | $A_2$ | $A_3$ | $A_4$ |
| **Teil I** | | | | |
| Toluol | 9000 | 9000 | 9000 | 9000 |
| **Teil II** | | | | |
| Methylmethacrylat | 3915 | 3915 | 3915 | 3915 |
| n-Butylmethacrylat | 1470 | 1715 | | |
| n-Butylacrylat Styrol | 1955 | 1955 | 2445 1470 | 2200 1715 |
| Glycidylmethacrylat | 980 | 735 | 735 | 735 |
| Maleinsäureanhydrid | 1470 | 1470 | 1225 | 1225 |
| **Teil III** | | | | |
| tert.-Butylperoxy-2-ethylhexanoat (70%ig) | 580 | 580 | 580 | 580 |
| Toluol | 630 | 630 | 630 | 630 |
| Polymerisationstemperatur (°C) | 110 | 110 | 110 | 130 |
| Festgehalt (%) | 50,4 | 50,6 | 50,4 | 49,9 |
| Viskosität bei 23°C (mPa.s) | 13260 | 14960 | 1090 | 550 |
| Glasübergangstemperatur des Festharzes (Tg, °C) | 83,4 | 84,1 | 61,8 | 58,9 |

Tabelle II

| Hydroxylgruppen enthaltende Copolymerisate (Mengenangaben in g) | | |
|---|---|---|
| Copolymerisate | $B_1$ | $B_2$ |
| **Teil I** | | |
| Toluol | 9000 | 9000 |
| **Teil II** | | |
| Methylmethacrylat | 3660 | 4325 |
| n-Butylmethacrylat | 2375 | 2690 |
| Styrol | 1870 | 1260 |
| Hydroxyethylmethacrylat | 1890 | 1420 |
| Acrylsäure | 100 | 100 |
| **Teil III** | | |
| tert.-Butylperoxy-2-ethylhexanoat (70%ig) | 440 | 580 |
| Toluol | 665 | 625 |
| Polymerisationstemperatur (°C) | 125 | 110 |
| Festgehalt (%) | 50,5 | 51,0 |
| Viskosität bei 23°C (mPa.s) | 2365 | 1750 |
| Glasübergangstemperatur des Festharzes (Tg, °C) | 68 | 61 |
| OH-Zahl des Festharzes (mg KOH/g) | 80 | 60 |

II Herstellung eines Harnstoff- und Urethangruppen aufweisenden Polyolvernetzers $B_3$

In einem 2-l-Vierhalskolben mit Rührer, Rückflußkühler und zwei Tropftrichtern werden 444 g 1-Isocyanato-3-isocyantomethyl-3,5,5-trimethylcyclohexan, 168,5 g Aceton und 0,2 g Dibutylzinndilaurat vor-

7

gelegt. Die Mischung wird unter Rühren und Stickstoffatmosphäre auf 60°C erwärmt. Dann wird bei 60°C eine Lösung von 118 g Hexandiol-1,6 in 168,5 g Aceton innerhalb von 2 Stunden zugetropft. Anschließend wird so lange bei 60°C gerührt, bis der NCO-Gehalt der Reaktionsmischung ca. 9,3 % beträgt. Anschließend wird die Mischung in einen Tropftrichter gefüllt und bei 20°C zu 150 g 1-Amino-2-propanol, das in einem 2-l-Dreihalskolben mit Rührer, Rückflußkühler und Tropftrichter vorgelegt wurde, innerhalb 1 Stunde zugetropft. Es wird danach so lange gerührt, bis der NCO-Gehalt der Reaktionsmischung < 0,1 % ist. Anschließend wird das Lösungsmittel möglichst vollständig im Vakuum abdestilliert und das Produkt danach im Vakuumtrockenschrank bei 80°C und 15 mbar bis zur Gewichtskonstanz getrocknet. Man erhält einen farblosen Feststoff mit einem OH-Gehalt von 4,5 % und einer Glasübergangstemperatur Tg (DTA)von 67°C.

III Herstellung der erfindungsgemäßen Pulverlackbeschichtungsmittel

Die Copolymerisate $A_1$ bis $A_4$ werden jeweils mit einem Polyolvernetzer B) und anderen Hilfs- und Zusatzmitteln C) in einem handelsüblichen Extruder aufgeschmolzen und homogenisiert. Nach dem Erstarren der ausgetragenen Schmelze wird das Produkt gemahlen, durch Sieben von Anteilen mit einem über 0,1 mm liegenden Teilchendurchmesser befreit, mittels einer elektrostatischen Sprüheinrichtung auf Prüfbleche appliziert und anschließend 30 Minuten bei 140°C ausgehärtet.

Die Lösungsmittelbeständigkeit der ca. 50 μm dicken Lackfilme wird durch einen Wischtest mit einem acetongetränkten Wattebausch geprüft. Angegeben wird die Anzahl der Doppelhübe, nach denen der Lackfilm ohne sichtbare Veränderung bleibt. Mehr als 50 Doppelhübe pro Film wurden nicht durchgeführt.

In Tabelle III sind die jeweiligen Formulierungen in Gewichtsprozenten sowie die Lösungsmittelbeständigkeit als Grad der Vernetzung aufgeführt.

Tabelle III: Formulierungen der erfindungsgemäßen Pulverbeschichtungsmittel (Angaben in Gewichtsprozenten)

| Formulierung | 1 | 2 | 3 | 4 | 5 | 6 | 7 | 8 | 9 | 10 |
|---|---|---|---|---|---|---|---|---|---|---|
| Copolymerisate A) | 61,3 A$_1$ | 62,5 A$_3$ | 58,7 A$_2$ | 62,5 A$_4$ | 34,2 A$_1$ | 29,2 A$_2$ | 47,3 A$_3$ | 29,0 A$_4$ | 88,0 A$_2$ | 63,8 A$_1$ |
| Copolymerisate B) | | | | | 35,1 B$_1$ | 40,1 B$_2$ | | | | |
| Polyolvernetzer B$_3$ | | | | | | | 22 | | | 35,5 |
| Crelan® U 502 [1] | | | | | | | | 40,3 | | |
| THEIC [2] | 8,0 | 6,8 | | 6.8 | | | | | 11,3 | |
| 2,2-Bis-(4-hydroxycyclohexyl)-propan | | | 10,6 | | | | | | | |
| Modaflow® P III [3] | 0,7 | 0,7 | 0,7 | 0,7 | 0,7 | 0,7 | 0,7 | 0,7 | 0,7 | 0,7 |
| Titandioxid | 30,0 | 30,0 | 30,0 | 30,0 | 30,0 | 30,0 | 30,0 | 30,0 | 50 | 50 |
| Acetonwischtest (Anzahl der Doppelhübe) | 50 | 50 | 42 | 48 | 50 | 50 | 46 | 50 | 50 | 50 |

1) Handelsprodukt der Firma Bayer AG, OH-funktioneller Polyester mit einem Hydroxylgehalt von ca. 1,5 %

2) N,N',N''-Tris-(2-hydroxyethyl)-isocyanurat

3) Handelsprodukt der Firma Monsanto, Verlaufshilfsmittel

**Patentansprüche**

1. Verwendung von unterhalb 30 °C festen, oberhalb 150 °C flüssigen, gegebenenfalls Hilfs- und Zusatzmitteln der Pulverlack-Technologie enthaltenden, pulverförmigen Kombinationen aus

A) 10 bis 99 Gew.-Teilen einer Copolymerisatkomponente, bestehend aus mindestens einem Copolymerisat von olefinisch ungesättigten Verbindungen mit einem als Gewichtsmittel bestimmten Molekulargewicht von 1 500 bis 75 000, welches sowohl

(i) 1 bis 30 Gew.-% an cyclischen Carbonsäureanhydridgruppen (berechnet als $C_4H_2O_3$) als auch

(ii) 0,3 bis 10 Gew.-% an Epoxidgruppen (berechnet als $C_2H_3O$) chemisch gebunden enthält, und

B) 1 bis 90 Gew.-Teilen einer Polyolkomponente, bestehend aus mindestens einem organischen Polyol mit mindestens zwei Hydroxylgruppen pro Molekül

als Pulverlack, mit der Maßgabe, daß auf jede Anhydridgruppe der Komponente A) 0,1 bis 10 Hydroxylgruppen der Komponente B) entfallen.

2.  Verwendung gemäß Anspruch 1, dadurch gekennzeichnet, daß die Copolymerisate der Komponente A) durch radikalisch initiierte Copolymerisation erhaltene Copolymerisate aus

a) 1 bis 30 Gew.-Teilen copolymerisierbaren, Anhydridgruppen enthaltenden Monomeren,

b) 1 bis 66 Gew.-Teilen copolymerisierbaren, Epoxidgruppen enthaltenden Monomeren sowie

c) 4 bis 98 Gew.-Teilen copolymerisierbaren, anhydridgruppen- und epoxidgruppenfreien, nichtfunktionellen Monomeren

darstellen.

3.  Verwendung gemäß Anspruch 2, dadurch gekennzeichnet, daß in den Copolymerisaten der Komponente A) als einpolymerisierte, anhydridfunktionelle Monomere Maleinsäureanhydrid und/oder Itaconsäureanhydrid vorliegen.

4.  Verwendung gemäß Anspruch 2 und 3, dadurch gekennzeichnet, daß in den Copolymerisaten der Komponente A) als einpolymerisierte` epoxidfunktionelle Monomere Glycidylacrylat, Glycidylmethacrylat und/oder Allylglycidylether vorliegen.

5.  Verwendung gemäß Anspruch 4, dadurch gekennzeichnet, daß es sich bei der Komponente B) um Polyhydroxylverbindungen eines über 261 liegenden Molekulargewichts, ausgewählt aus der Gruppe bestehend aus hydroxyfunktionellen Copolymerisaten, hydroxyfunktionellen Polyethern, hydroxyfunktionellen Polyestern, gegebenenfalls Harnstoff-modifizierten, hydroxyfunktionellen Polyurethanen, hydroxyfunktionellen Polyhamstoffen, hydroxyfunktionellen Polycarbonaten und Gemischen derartiger hydroxyfunktioneller Verbindungen, handelt.

6.  Verwendung gemäß Anspruch 1 bis 4, dadurch gekennzeichnet, daß es sich bei der Komponente B) um mehrwertige Alkohole des Molekulargewichtsbereichs 104 bis 261 mit 2 bis 6 Hydroxylgruppen pro Molekül handelt.

## Claims

1.  The use of pulverulent combinations, which are solid below 30°C and liquid above 150°C and optionally contain auxiliary substances and additives of powder lacquer technology, of

A) from 10 to 99 parts by weight of a copolymer component consisting of at least one copolymer of olefinically unsaturated compounds having a molecular weight, determined as a weight average, of from 1 500 to 75 000, containing both

(i) from 1 to 30% by weight of cyclic carboxylic anhydride groups (calculated as $C_4H_2O_3$) and

(ii) from 0.3 to 10% by weight of epoxide groups (calculated as $C_2H_3O$) in a chemically bound form, and

B) from 1 to 90 parts by weight of a polyol component consisting of at least one organic polyol having at least two hydroxyl groups per molecule

as powder lacquer, with the proviso that from 0.1 to 10 hydroxyl groups of component B) are available for each anhydride group of component A).

2.  The use according to claim 1, characterised in that the copolymers of component A) are copolymers, obtained by radically initiated copolymerisation, of

a) from 1 to 30 parts by weight of copolymerisable monomers containing anhydride groups,

b) from 1 to 66 parts by weight of copolymerisable monomers containing epoxide groups and

c) from 4 to 98 parts by weight of copolymerisable nonfunctional monomers free of anhydride groups and epoxide groups.

3. The use according to claim 2, characterised in that the copolymers of component A) contain maleic anhydride and/or itaconic anhydride as anhydride functional monomers incorporated by polymerisation.

4. The use according to claims 2 and 3, characterised in that the copolymers of component A) contain glycidyl acrylate, glycidyl methacrylate and/or allyl glycidyl ethers as epoxide functional monomers incorporated by polymerisation.

5. The use according to claim 4, characterised in that component B) consists of polyhydroxyl compounds having a molecular weight of above 261, selected from the group comprising hydroxyfunctional copolymers, hydroxyfunctional polyethers, hydroxyfunctional polyesters, optionally urea-modified hydroxyfunctional polyurethanes, hydroxyfunctional polyureas, hydroxyfunctional polycarbonates and mixtures of such hydroxyfunctional compounds.

6. The use according to claims 1 to 4, characterised in that component B) consists of polyhydric alcohols in the molecular weight range of from 104 to 261 having from 2 to 6 hydroxyl groups per molecule.

**Revendications**

1. Utilisation de combinaisons pulvérulentes solides en dessous de 30°C, liquides au-dessus de 150°C, contenant éventuellement des adjuvants et des additifs de la technologie des laques, des vernis ou des peintures pulvérulents, constituées par

   A) de 10 à 99 parties en poids d'un composant de copolymère constitué par au moins un copolymère de composés à insaturation oléfinique ayant un poids moléculaire déterminé comme moyenne pondérale de 1.500 à 75.000, qui contient aussi bien

   (i) de 1 à 30% en poids de groupes d'anhydrides carboxyliques cycliques (calculés comme $C_4H_2O_3$) que

   (ii) de 0,3 à 10% en poids de groupes époxyde (calculés comme $C_2H_3O$) liés par voie chimique, et

   B) de 1 à 90 parties en poids d'un composant de polyol constitué par au moins un polyol organique contenant au moins deux groupes hydroxyle par molécule,

   comme laque, vernis ou peinture pulvérulents, avec cette mesure que, pour chaque groupe anhydride du composant A), on obtient 0,1 à 10 groupes hydroxyle du composant B).

2. Utilisation selon la revendication 1, caractérisée en ce que les copolymères du composant A) représentent des copolymères obtenus par copolymérisation à déclenchement radicalaire, constitués par

   a) de 1 à 30 parties en poids de monomères copolymérisables contenant des groupes anhydride,

   b) de 1 à 66 parties en poids de monomères copolymérisables contenant des groupes époxyde, ainsi que

   c) de 4 à 98 parties en poids de monomères copolymérisables non fonctionnels exempts de groupes anhydride et de groupes époxyde.

3. Utilisation selon la revendication 2, caractérisée en ce que, dans les copolymères du composant A), sont présents, comme monomères anhydride-fonctionnels incorporés par copolymérisation, l'anhydride maléique et/ou l'anhydride itaconique.

4. Utilisation selon les revendications 2 et 3, caractérisée en ce que, dans les copolymères du composant A), sont présents, comme monomères époxyde-fonctionnels incorporés par polymérisation, l'acrylate de glycidyle, le méthacrylate de glycidyle et/ou l'éther allylglycidylique.

5. Utilisation selon la revendication 4, caractérisée en ce que, en ce qui concerne le composant B), il s'agit de composés polyhydroxylés d'un poids moléculaire se situant au-delà de 261, choisis parmi le groupe constitué par des copolymères hydroxy-fonctionnels, des polyéthers hydroxy-fonctionnels, des polyesters hydroxy-fonctionnels, des polyuréthannes hydroxy-fonctionnels éventuellement modifiés par un groupe urée, des polyurées hydroxy-fonctionnelles, des polycarbonates hydroxy-fonctionnels et des mélanges des composés hydroxy-fonctionnels de ce type.

6.   Utilisation selon les revendications 1 à 4, caractérisée en ce que, quant au composant B), il s'agit d'alcools polyvalents du domaine de poids moléculaire de 104 à 261, contenant de 2 à 6 groupes hydroxyle par molécule.